# EUROPEAN PATENT SPECIFICATION

(11) **EP 3 566 092 B1**
(45) Date of publication and mention of the grant of the patent: **05.10.2022**
(21) Application number: 18736639.8
(22) Date of filing: 03.01.2018
(51) Int. Cl.: G02B 27/01, G02B 27/00, G02B 27/42, G06T 19/00, F21V 8/00

(54) **OPTICAL SYSTEM FOR NEAR-EYE DISPLAYS**
OPTISCHES SYSTEM FÜR AUGENNAHE ANZEIGEN
SYSTÈME OPTIQUE DESTINÉ À DES AFFICHAGES PROCHES DE L' OEIL

(30) Priority: 04.01.2017 US 201762442070 P
(43) Date of publication of application: 13.11.2019
(73) Proprietor: Lumus Ltd., 7403631 Ness Ziona (IL)
(72) Inventor: RUBIN, Yuval, 6719411 Tel Aviv (IL); SHARLIN, Elad, 7684100 Mishmar David (IL)
(74) Representative: Becker Kurig & Partner Patentanwälte mbB
(86) International application number: PCT/IL2018/050010
(87) International publication number: WO 2018/127913

(56) References cited:
- WO-A1-2007/129783
- WO-A1-2015/164158
- GB-A- 2 495 398
- US-A1- 2011 176 218
- US-A1- 2012 044 572
- US-A1- 2012 154 920
- US-A1- 2014 272 329

## Description

### TECHNOLOGICAL FIELD

The present invention is generally in the field of virtual imaging, and relates to an optical system for use in a near-eye displays for displaying virtual images. More specifically, the invention relates to an optical system for near-eye displays based on a lightguide coupler.

### BACKGROUND

The main physical principle of the operation of a lightguide coupler used in near-eye displays (NEDs) is that light waves, indicative of a virtual image, are trapped inside a substrate by total internal reflections from the major surfaces of the substrate, and are coupled out into the eyes of the viewer by one or more internal reflecting or partially reflecting / diffractive surfaces. One of the important factors defining the performance of the NED is associated with a requirement for uniformity of illumination formed by light output from the lightguide coupler. The non-uniformities, or irregularities, are intrinsic to the lightguide based NEDs, regardless of the physics of the coupling-out. The irregularities can look like fringes, or bands of lower/higher intensity over the image, with angular frequencies lay roughly in a range between ¼ of the field of view (FOV) and FOV/100. In light-guide architectures that address colors independently, these appear as color variations across the scene.

In document US 2011/176218 A1, it is disclosed a waveguide formed which allows propagation of image bearing light along a light pathway by total internal reflection of the image bearing light. The waveguide material is a light transparent material arranged to allow an observer, not illustrated, to look through the layer of material whilst also arranged to carry image bearing light. A grating element carried within the layer of material is arranged such that impinging image bearing light following the light pathway is either diffracted out of the layer of material as a pupil of image bearing light or is reflected by one of the outer waveguide surfaces. The efficiency of the grating element is varied along the length of the layer of the waveguide material to achieve the desired pupils of image bearing light along the length of the layer of waveguide material. This results in a more even brightness of pupils of image bearing light, as perceived by the observer looking through the layer of the waveguide material.

### GENERAL DESCRIPTION

As described above, one of the important factors defining the performance of the NED in a virtual imaging system is a requirement for uniformity of illumination/brightness across the field of view of the system output. for example, in PCT patent publication number WO2016/132347, assigned to the same assignee of the present invention, a non-uniformity in the resulting image might occur due to the different reflection sequences of different rays that reach each selectively reflecting surface: some rays arrive without previous interaction with a selectively reflecting surface; other rays arrive after one or more partial reflections. PCT patent publication number WO2016/132347 provides beam splitting coating averaging up the brightness of the dark and light areas of the image. Furthermore, to avoid dark as well as bright stripes in the image, an exact plate thickness should be chosen.

The present invention provides a novel optical system and a method thereof to correct brightness irregularities in virtual-image light. This is implanted in the invention by using specifically designed masking optical element optically coupled to an optical unit guiding virtual-image light. In some embodiments, the optical system is configured for at least partially obstructing regions of different brightness in the image, and/or redistributing the non-uniform brightness to give uniform result.

The invention can be used in a see-through NED. The invention can be implemented to advantage in a large number of imaging applications, such as, for example, head-mounted and head-up displays, cellular phones, compact displays, 3-D displays, compact beam expanders as well as non-imaging applications such as flat-panel indicators, compact illuminators and scanners.

According to one broad aspect of the invention, it provides an optical system for use in a near-eye display device for projecting a virtual image. The optical system comprises:
an optical unit defining a light guiding channel for guiding input light indicative of the virtual image through said channel and providing output light with a field of view, said output light having a predetermined non-uniform intensity profile across said field of view; and
a masking optical element optically coupled to an output of said optical unit for output light passage through the masking optical element, said masking optical element having a spatially varying transmission profile across said masking optical element configured in accordance with intensity non-uniformities due to a non-uniform transfer function of said optical unit, to affect regions of relatively high light intensity within said intensity profile to thereby apply intensity modulation to light passing through the masking optical element to provide the virtual image with improved light intensity uniformity,
characterized in that said masking optical element comprises a pattern of successive regions of continuously varying transmission, thereby providing said spatially varying transmission profile,
wherein said pattern providing the spatially varying transmission profile is defined by at least one of the following: (a) said pattern comprises a predetermined arrangement of said regions defined by predetermined dimensions of the regions, spaces between them, and optical density of said regions; (b) said pattern corresponds to a projection of said predetermined non-uniform intensity profile across said field of view onto said masking optical element.

In some embodiments, the spatially varying transmission profile of the masking optical element is configured to affect the light intensity in the regions of relatively high light intensity to be below a certain threshold.

In some embodiments, the optical unit comprises a first light guiding element configured to guide the input light propagation therethrough via total internal reflections from major surfaces of the first light guiding element.

In some embodiments, the optical unit has at least one of the following configurations: the optical unit is configured as a beam expander; and the first light guiding element of the optical unit comprises a substrate/body having the major surfaces and one or more at least partially reflective surfaces embedded in the substrate for reflecting the light indicative of the virtual image out of the body towards the masking optical element.

In some embodiments, the optical system also comprises an additional (second) optical unit optically coupled to the masking optical element for guiding the intensity modulated light emerging from the masking optical element to be output from the display device in one or more output directions.

In some embodiments, the second optical unit is configured as a light-guide for guiding light propagation therethrough by total internal reflection from major surfaces of the light guide, and has one or more at least partially reflective surfaces for reflecting the virtual image light towards one or more output directions.

In some embodiments, the additional optical unit is configured as a beam expander.

In some embodiments, the optical unit and the additional optical unit (first and second optical units) are configured as (first and second) beam expanders to successively expand the light indicative of the virtual image along two perpendicular axes, respectively.

In some embodiments, at least the light guide of the additional (second) optical unit is configured as a see-through second light guiding element for guiding the virtual image being projected and transmitting a real scene image, thereby augmenting the virtual image onto the real scene image.

In some embodiments, the first and second light guiding elements of, respectively, the optical unit and the additional optical unit are accommodated in a cascaded fashion such that the second light guiding element is optically coupled to an output of the first light guiding element; and
the masking optical element is accommodated at an optical interface between the first and second light guiding elements for optically coupling the light outputted from the first light guiding element with a certain field of view to an input of the second light guiding element, the spatially varying transmission profile across the masking optical element is configured in accordance with intensity non-uniformities due to a non-uniform transfer function of said optical unit, thereby improving intensity uniformity of light being input to the second light guiding element.

According to a further broad aspect of the invention, there is provided an optical system for use in a near-eye display device for projecting a virtual image, the optical system comprising:
an optical unit having an optical pupil, and configured to define a light guiding channel for guiding light through said channel to be output from the optical unit in one or more output directions; and
a masking optical element accommodated upstream of the optical unit with respect to a general propagation direction of light through the optical system, said light having a predetermined non-uniform intensity profile across a certain field of view, said masking optical element projecting input light indicative of the virtual image onto said optical pupil of the optical unit, wherein said masking optical element has a spatially varying transmission profile across said masking optical element configured in accordance with intensity non-uniformities due to a non-uniform transfer function of said optical unit, to affect regions of relatively high light intensity within said non-uniform intensity profile, thereby applying intensity modulation to the light passing through the masking optical element to improve intensity uniformity of light being input to the optical pupil of the optical unit,
characterized in that
said masking optical element comprises a pattern of successive regions of continuously varying transmission, thereby providing said spatially varying transmission profile, wherein said pattern providing the spatially varying transmission profile is defined by at least one of the following: (a) said pattern comprises a predetermined arrangement of said regions defined by predetermined dimensions of the regions, spaces between them, and optical density of said regions; (b) said pattern corresponds to a projection of said predetermined non-uniform intensity profile across said field of view onto said masking optical element.

In some embodiments, the optical unit comprises a light guiding element configured to guide the light propagation therethrough via total internal reflections from major surfaces of the light guiding element.

In some embodiments, the light guiding element is configured as a beam expander.

The invention in its further aspect provides a method for improving intensity uniformity of light, indicative of a virtual image in a near-eye display device. The method comprises:
passing light corresponding to a uniform input scene through an optical unit to produce input light having intensity non-uniformities due to a non-uniform transfer function of said optical unit;
providing data indicative of a non-uniform intensity profile of the input light indicative of the virtual image across a certain field of view; and
analyzing said data indicative of the non-uniform intensity profile of the input light, and determining a spatially varying transmission profile to be applied to the input light across said certain field of view to apply intensity modulation to the input light to affect regions of relatively high light intensity within said intensity profile and thereby improve intensity uniformity of said light,
characterized in that
said spatially varying transmission profile comprises a pattern of successive regions of continuously varying transmission,
wherein said pattern providing the spatially varying transmission profile corresponds to a projection of said non-uniform intensity profile across said field of view onto a plane in which said spatially varying transmission profile is applied to said input light.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1A** shows a schematic illustration of an optical system to be used in a near-eye display projecting a virtual scene;
**Figs. 1B and 1C** show schematically two specific, non-limiting examples of the optical system for use in (see through) near-eye displays, utilizing the principles of the invention by appropriately placing specifically designed masking optical element in between optical units of the optical system;
**Fig. 2** shows an image of an input scene with and without using the masking optical element of the present invention;
**Figs. 3A-3C** show examples of different positions of the masking optical element in the optical system of a near-eye display;
**Fig. 3D** more specifically illustrates an example of a light guiding expander suitable to be used in the optical systems of Figs. 3A-3C; and
**Fig. 4** shows different possible varying transmission profiles of the masking optical element according to some embodiments of the present invention.

### DETAILED DESCRIPTION OF EMBODIMENTS

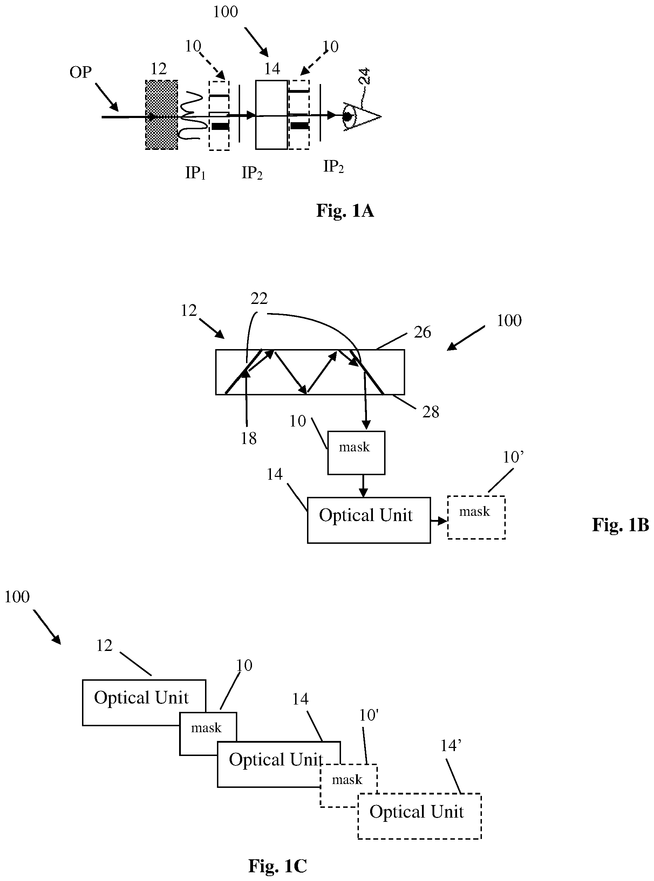

**Fig. 1A** illustrates one non-limiting example of embodiments of the present invention. The present invention provides a novel optical system **100** to be used in a near-eye display device for projecting a virtual image. Optical system **100** comprises an optical unit **12** defining a light guiding channel for guiding input light indicative of the virtual image through the channel and providing output light with a field of view. As shown, the output light typically has a certain non-uniform intensity profile **IP₁** across the field of view. Further provided in the optical system **100** is a masking optical element **10** optically coupled to an output of optical unit **12** and allowing output light passage through the masking optical element.

Masking optical element **10** has a spatially varying transmission profile across the masking optical element 10 configured in accordance with the predetermined non-uniform intensity profile **IP₁** of the optical unit **12** upstream thereof. Such non-uniform intensity profile **IP₁** has regions of relatively high and relatively low illumination intensities. The spatially varying transmission profile of the masking optical element **10** is configured to affect regions of the relatively high light intensity within said intensity profile to thereby apply intensity modulation to light passing through masking optical element **12** to improve intensity uniformity of light emerging from masking optical element **12.**

Optical unit **12** has a certain transfer function defining the non-uniform light intensity profile **IP₁.** Optical unit **12** is not limited to any configuration and may be any at least partially transparent optical unit receiving and transmitting light indicative of a virtual image. For example, optical unit **12** may be an optical coupler and/or combiner and/or a beam expander, and/or a light-guide optical element (e.g. LOE). The LOE is a waveguide / substrate guiding light by total internal reflection from the major surfaces thereof and including a plurality of at least partially reflecting surfaces for directing light out of the waveguide towards one or more output directions. The masking optical element **10** defines a transmission pattern formed by an array of two or more regions of different transmissions, thereby providing the spatially varying transmission profile and transferring light of the virtual image with a substantially uniform intensity profile **IP₂** across the field of view of the display.

In some embodiments, as will be exemplified further below, optical system **100** comprises an additional optical unit **14** optically coupled to masking optical element **10** for guiding the intensity modulated light emerging from the masking optical element **10** to be output in one or more output directions. The additional optical unit **14** is configured for projecting the image towards an eye **24** and defining a common light optical path **OP** with the optical unit **12** and with the masking optical element **10.**

Generally, masking optical element **10** is placed in an intermediate plane between the input and output planes defined by the optical path **OP** through the optical system **100.** Considering the example of two optical units **12** and **14,** the masking optical element **10** may be located therebetween downstream to the first masking optical element along the optical path **OP** and adjacent (or in a near proximity) to the input of the second masking optical element.

The display may be implemented for augmented or virtual reality applications. If the display is configured for augmented reality, i.e. configured as a see-through near-eye display device, the second optical unit **14** is configured for projecting an augmented image (formed by a real scene and virtual images) towards the eye **24.** In this case, masking optical element **10** is positioned at an intermediate plane, i.e. upstream / before the second optical unit **14.** If the display is configured for virtual reality (near-eye display device), the second optical unit **14** is configured for projecting a virtual image towards the eye **24.** In this case, masking optical element **10** may be positioned also at a plane after the second (last) optical unit **14.** The spatially varying transmission profile then corresponds to the transfer functions of the optical unit **14.**

Thus, generally, the masking optical element **10** is located at the output of an optical unit whose illumination uniformity across the field of view is to be improved, and such masking optical element has a pattern of spatially variable transmission configured in accordance with illumination non-uniformity of said optical unit.

Masking optical element **10** may be located close to, up to a physical contact with, the output surface of the optical unit **12** or at a certain distance thereof. The masking optical element **10** can be fabricated as a patterned element/film using any known patterning technique, As indicated such as: lithography patterning including thin-film-based partial absorbers/reflectors and/or binary micro-structures, (e.g. polka-dot, wire grid, random patterns, including varying density), absorption filters, including semi-transparent layers, thin-films, photographic film, printing, precise printing of binary structures on a transparent substrate, any technique used for writing and/or replication of diffractive structures, including ruling, etching, printing, holographic methods.

Thus, generally, the masking optical element **10** has a pattern formed by an array of two or more regions (e.g. spaced-apart regions) of different transmissions (e.g. at least partially obstructing regions), thereby providing the spatially varying transmission profile. The varying transmission profile is determined in accordance with illumination no-uniformity of the optical unit upstream of the masking optical element to control the brightness of the light and to thereby transfer (direct) light of the virtual image with a substantially uniform intensity profile **IP₂.** Such spatially varying transmission of the masking optical element **10** may be implemented by a pattern of successive regions of continuously varying transmission.

In some embodiments, the regions of different transmissions correspond to a projection of the predetermined non-uniform intensity profile **IP₁** across the field of view onto the masking optical element **10** such that the regions having an intensity above a certain threshold are at least partially obstructed. For example, the threshold level may be defined as the level of brightness of the background of the image. The regions of relatively high light intensity as compared to the background brightness are at least partially masked in order to level the brightness with respect to the adjacent regions.

It should be understood that the optical system **100** exemplified here presents a single-eye part of the near-eye display. The two-eye system, although not specifically shown here, is formed by similar, identically symmetric (mirror symmetry) optical systems **100.**

In general, the masking optical element **10** can have an arbitrary spectral response.

Also, it should be noted that because of the positioning of the masking optical element **10,** the optical system is not limited to any angular span and therefore it covers a large angular span. As described above, it can be fabricated from cheap elements and with non-costly processes (no vacuum technique, heat etc. needed). Also, the thickness of the masking optical element **10** is non-critical and can be varied as desired.

**Figs. 1B and 1C** illustrate specific examples of the present invention. To facilitate understanding the same reference numbers are used to identify functionally common components in all the examples of the invention. In the example of **Fig. 1B****,** the optical system **100** includes two optical units **12** and **14** with a masking optical element **10** in between. Thus, in this example, masking optical element **10** is configured in accordance with the intensity non-uniformity profile (predetermined and/or modeled) induced by the light propagation through the preceding optical unit **12.**

As shown, optionally, the optical system **100** includes an additional masking optical element **10'** at the output of the optical unit **14.** In this case, the masking optical element **10'** is configured in accordance with an intensity non-uniformity profile further induced by optical unit **14.** It should be noted, although not specifically shown, that optical unit which creates intensity non-uniformity may be formed by one or more separate masking optical elements such as light guides, lenses, etc. In the specific example of **Fig. 1B****,** the optical unit **12** is a substrate-guided optical module or light guiding optical element (LOE) configured for guiding input light **18** indicative of virtual image from an image generator or input collimator as the case may be (which are not specifically shown) by total internal reflection from major surfaces **26, 28** of the LOE which has light directing (at least partially reflective) surfaces/interfaces **22** directing light out of the LOE in one or more output directions. The masking optical element **10** is located at the output of the **LOE 12.** As indicated above, the masking optical element may be a stand-alone unit at the output of the LOE **12.**

It should, however, be noted that the masking optical element **10** might be implemented by patterning a respective output facet of the LOE **12** or attaching a patterned film thereto. Hence, in this case, in order to keep the total internal reflection condition for light propagation through the optical system, the masking optical element is configured for operation in a reflection mode, i.e. the spatially varying transmission profile of the mask applies the illumination uniformity improving optical coding to light incident thereon and reflects the light rather than allowing its propagation through the mask in the original incident direction. Hence, such masking optical element creates a reflected light field of the improved illumination uniformity, and this light is properly directed by a respective light directing surface embedded in the LOE towards an output direction.

As shown, the optical system **100** may comprise a second optical unit **14** downstream of the masking optical element **10,** as well as may comprise further masking optical element **10'.** The second optical unit **14** may or may not be LOE-like unit. Considering the near-eye virtual image display, the masking optical element may be located at the output of the optical system (e.g. in addition to a masking optical element at the intermediate location along the entire path through the optical system), while in case of see-through configuration of the near-eye display, there is no such masking optical element at the output of the entire optical system.

All the elements/parts of the optical system might be integrated in a common housing, forming a closed arrangement, while not necessarily being in physical contact between them. Since the substrate-guided masking optical element is very compact and lightweight, it could be installed in a vast variety of arrangements. This embodiment is designated for applications where the display should be near-to-eye: head-mounted, head-worn or head-carried.

It should also be noted that the masking optical element **10** is configured such that the total internal reflection of the light inside the LOE's substrate **12** as well as the coupling of the light in and out the substrate **12** are not affected. In particular, both s and p polarization, at all angles, are treated.

**Fig. 1C** exemplifies an optical system **100** having a cascaded arrangement of multiple assemblies each formed by an optical unit whose illumination non-uniformity is to be corrected and the correcting masking optical element. More specifically, masking optical element **10** is configured to correct illumination non-uniformity of optical unit **12** upstream thereof; the so-corrected light field enters a successive, second optical unit **14,** and in case such optical unit also induces illumination non-uniformity, it is followed by a correspondingly-designed masking optical element **10',** which might be followed by a further optical unit **14',** which in this example is the output element of optical system **100.**

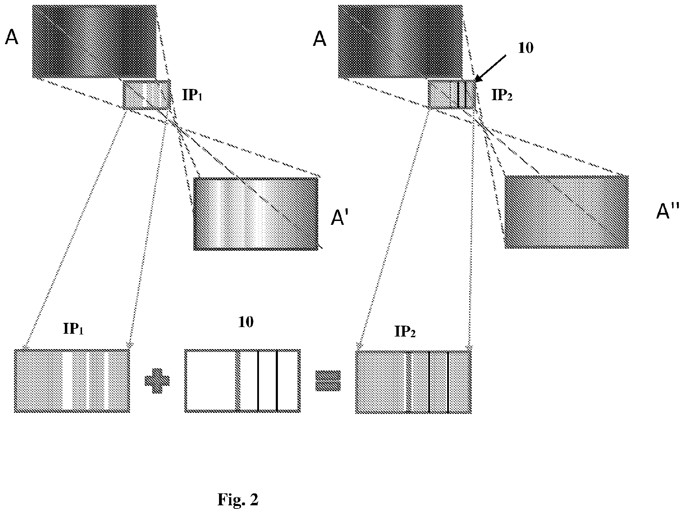

As described above, a uniform input scene a passing through any masking optical element undergoes non-uniformities. This is illustrated for example in images labelled **A** in **Fig. 2****.** This phenomenon is due to the non-uniform transfer function of the optical unit. The light outputted from the optical unit has a non-uniform intensity profile **IP₁** defining regions of different brightnesses. The correction mask **10** (i.e. masking optical element) is configured for affecting regions of relatively high light intensity within the intensity profile to thereby create a uniform intensity profile **IP₂.** For example, a processing unit may receive an image indicative of an input light such as images **A** and may extract data indicative of an intensity profile **IP₁** defining regions (width and pitch) of different brightnesses. The data may be analyzed to determine the spatially varying transmission profile to be applied to the input light across the certain field of view to apply intensity modulation to the input light to affect regions of relatively high light intensity within the intensity profile. For example, the image may be segmented into a plurality of bands and the brightness of each band may be calculated and compared to a reference brightness corresponding to the background brightness. The spatial location of these bands as well as the width of such bands may be extracted from the image to determine a varying transmission profile corresponding to the non-uniform intensity profile. Alternatively, the varying transmission profile may be determined by using simulations results based on the transfer function of the optical unit. Additionally or alternatively to the simulations and/or to the identifying process, the masking optical element may be placed at the output of the optical unit and preliminary measurements of optical characteristics of the optical unit may be conducted. An image at the output of the optical system may be analyzed to identify an arrangement of the regions of relatively high light intensity in the field of view. If some regions have still an over brightness as compared to the brightness of the background, the varying transmission profile of the masking optical element may be readjusted (spatial location, width and optical density of the obstructing regions) accordingly to affect such regions of over brightness. The measured beam profile is then compared to the modeled beam profile. As illustrated in **Fig. 2****,** the non-uniform intensity profile **IP₁** may be corrected by applying a selected apodization profile to light transmitted along the optical pathway. The image **A'** obtained without the correction shows fringes, or bands of lower/higher intensity, while the image A" obtained after applying the correction mask has clearly a uniform brightness.

It should be noted that the intensity profile of an optical unit of the known characteristics can be properly modeled / simulated. Actually, such optical characteristics defining the intensity profile across a given field of view of the optical unit include one or more of the following: an optical path defined by the optical unit, number and type of interactions the light undergoes with interfaces along the optical path (e.g. light directing surfaces **22** in the LOE exemplified above), as well as refractive indices of media along the optical path, and given intensity profile of light being input in the optical unit.

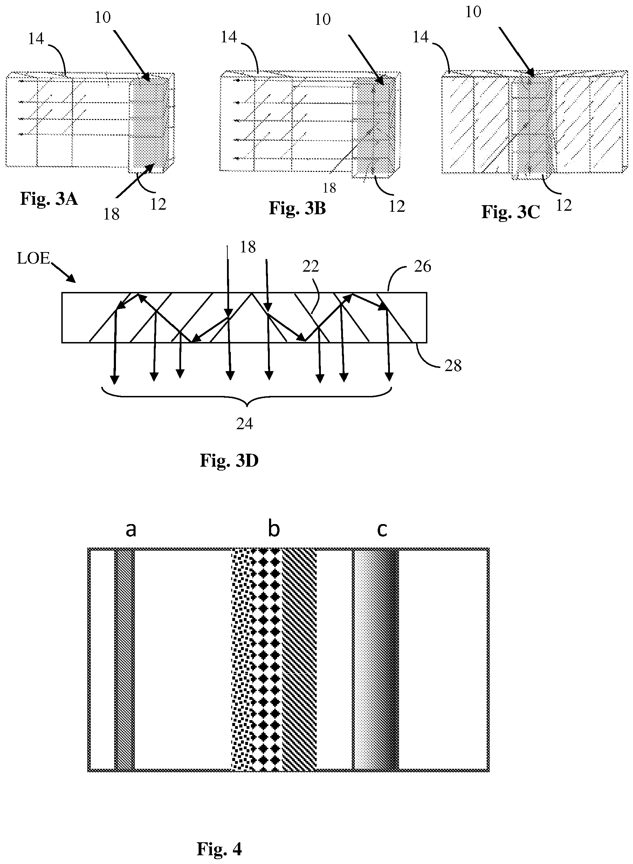

**Figs. 3A-3C** show different specific non-limiting examples of LOE-based optical systems of different configurations and different positions of the correction masking optical element **10** suitable for use in the see-through near-eye display. As described above (Fig. 1B), illumination uniformity correction masking optical element **10** may be placed at the output of the LOE **12** whose illumination non-uniformity is to be corrected, and may be further followed by another optical unit **14.**

In some embodiments, the masking optical element **10** may be placed between two LOE's **12** and **14** as shown in **Fig. 3A****.** Here, light **18** indicative of the virtual image enters LOE **12,** and while being guided by total internal reflection from major surfaces thereof is reflected by at least partially reflective surface (not seen here) onto the masking optical element **10,** which is configured in accordance with the predetermined (measured and/or modeled) illumination non-uniformity profile of the element **12.** The so illumination-corrected light enters LOE **14** to propagate in manner described above and being reflected out of the LOE **14** towards an observer.

In the specific not limiting examples of **Figs. 3B and 3C****,** one of the LOEs **(****Fig. 3B****)** or both of them **(****Fig. 3C****)** is configured also as a light expander. An example of such expander configuration of LOE is schematically illustrated in **Fig. 3D****.** As shown virtual-image light **18** enters the LOE at a center region thereof (generally, intermediate region) and after interacting with oppositely symmetric surfaces **22** starts propagation, via total internal reflection, in two opposite directions along the LOE being partially transmitted and partially reflected in an output direction thus creating an expanded light output **24.**

In the example of **Fig. 3B****,** the optical unit **12** is configured as such an expander, and the masking optical element **10** is placed between the LOE **12** and LOE **14.** In the example of **Fig. 3C****,** the two optical elements **12** and **14** are configured as expander-LOEs for successively expanding light field indicative of the virtual image along two perpendicular axes, respectively The masking optical element **10** is placed between the expanders **12** and **14.**

More specifically, in these specific and non-limiting examples, masking optical element **10** is placed at the optical interface between first and second optical units **12** and **14** for optically coupling the light outputted from optical unit **12** with a certain field of view and certain illumination non-uniformity profile across said field of view, to improve the illumination uniformity by applying a spatial transmission function to said light field and allow its input to the optical unit **14.** In the examples of **Figs. 3A-3C****,** the two optical units are configured as two cascaded waveguides or LOEs, configured as described above.

The spatially varying transmission profile of the masking optical element has some variable parameters appropriately selected according to the transfer function of the optical unit(s) upstream of the masking optical element to provide improved illumination uniformity of the scene. For example, such parameters include at least one of width, pitch and optical density of the obstructing regions of the masking optical element. Obstruction regions may be opaque and/or partially transparent, based on thin-layer(s), absorber and/or pattern, including diffractive. In this connection, it should be noted that the masking optical element can be diffractive to aid the desired light distribution. The varying transmission profile may be defined to affect regions having a high amplitude as described above. Additionally or alternatively, the varying transmission profile may be diffractive to affect regions having a non-uniform phase.

It should be noted that although the embodiments described above are exemplified via a mono-ocular optical system, that is, the image is projected onto a single eye, the invention can be used in applications, such as head-up displays (HUD), wherein it is desired to project an image onto both eyes.

**Fig. 4** schematically shows examples of various spatially varying transmission profiles. The pattern is characterized by a predetermined arrangement of the regions defined by predetermined dimensions of the regions, spaces between them, and optical density of said regions. Example a, which is not part of the invention, shows an opaque obstructing region. Example **b,** which is also not part of the invention, shows a binary pattern. Example c shows a varying transmittance according to the invention. In this connection, it should be noted that the intensity profile defines a plurality of regions having Gaussian distribution. However, the entire Gaussian profile might not be entirely masked but a masking portion having an undersized function (e.g. squared) masking the majority of the region of relatively high light intensity (around the intensity peak) is sufficient to obtain an overall uniform intensity profile. The spatially varying transmission profile is configured for reducing the intensity of the regions of high brightness to an average brightness level. To this end, the masking optical element may comprise absorbing regions. The complete obstruction of such regions is not necessary. The spatially varying transmission profile may be determined by using an apodization function changing the input intensity profile.

## Claims

1. An optical system (100) for use in a near-eye display device for projecting a virtual image, the optical system (100) comprising:
an optical unit (12) defining a light guiding channel for guiding input light indicative of the virtual image through said channel and providing output light with a field of view, said output light having a predetermined non-uniform intensity profile (IP₁) across said field of view; and
a masking optical element (10) optically coupled to an output of said optical unit (12) for output light passage through the masking optical element (10), said masking optical element (10) having a spatially varying transmission profile across said masking optical element (10) configured in accordance with intensity non-uniformities due to a non-uniform transfer function of said optical unit (12), to affect regions of relatively high light intensity within said intensity profile to thereby apply intensity modulation to light passing through the masking optical element (10) to provide the virtual image with improved light intensity uniformity
**characterized in that**
said masking optical element (10) comprises a pattern of successive regions of continuously varying transmission, thereby providing said spatially varying transmission profile, wherein said pattern providing the spatially varying transmission profile is defined by at least one of the following: (a) said pattern comprises a predetermined arrangement of said regions defined by predetermined dimensions of the regions, spaces between them, and optical density of said regions; (b) said pattern corresponds to a projection of said predetermined non-uniform intensity profile (IP₁) across said field of view onto said masking optical element (10).

2. The optical system (100) of claim 1, wherein said spatially varying transmission profile of the masking optical element (10) is configured to affect the light intensity in said regions to be below a certain threshold.

3. The optical system (100) according to any one of the preceding claims, wherein said optical unit (12) comprises a first
light guiding element configured to guide the input light propagation therethrough via total internal reflections from major surfaces (26, 28) of the first light guiding element.

4. The optical system (100) of claim 3, wherein said optical unit (12) has at least one of the following configurations: said optical unit (12) is configured as a beam expander; and said first
light guiding element of the optical unit (12) comprises a substrate having said major surfaces (26, 28) and one or more at least partially reflective surfaces embedded in said substrate for reflecting the light indicative of the virtual image out of said substrate towards the masking optical element (10).

5. The optical system (100) according to any one of the preceding claims, further comprising an additional optical unit (14) optically coupled to said masking optical element (10) for guiding the intensity modulated light emerging from the masking optical element (10) to be output from the display device in one or more output directions.

6. The optical system (100) of claim 5, wherein said additional optical unit (14) is configured as a light-guide for guiding light propagation therethrough by total internal reflection from major surfaces (26, 28) of the light guide, and having one or more at least partially reflective surfaces for reflecting the virtual image light towards one or more output directions.

7. The optical system (100) of claim 6, wherein said additional optical unit (14) is configured as a beam expander.

8. The optical system (100) according to any one of claims 5 to 7, wherein said optical unit (12) and said additional optical unit (14) are configured as beam expanders to successively expand the light indicative of the virtual image along two perpendicular axes, respectively.

9. The optical system (100) of any one of claims 6 to 8, wherein at least said light guide of the additional optical unit (14) is configured as a see-through second light guiding element for guiding the virtual image being projected and transmitting a real scene image, thereby augmenting the virtual image onto the real scene image.

10. The optical system (100) according to any one of claims 6 to 9, wherein:
the first and second light guiding elements of, respectively, said optical unit (12) and said additional optical unit (14) are accommodated in a cascaded fashion such that the second light guiding element is optically coupled to an output of the first light guiding element; and
said masking optical element (10) is accommodated at an optical interface between the first and second light guiding elements for optically coupling the light outputted from the first light guiding element with a certain field of view to an input of the second light guiding element, the spatially varying transmission profile across said masking optical element (10) being configured in accordance with intensity non-uniformities due to a non-uniform transfer function of said optical unit (12), thereby improving intensity uniformity of light being input to the second light guiding element.

11. An optical system (100) for use in a near-eye display device for projecting a virtual image, the optical system (100) comprising:
an optical unit (14) having an optical pupil, and configured to define a light guiding channel for guiding light through said channel to be output from the optical unit (14) in one or more output directions; and
a masking optical element (10) accommodated upstream of the optical unit (14) with respect to a general propagation direction of light through the optical system (100),
said light having a predetermined non-uniform intensity profile (IP₁) across a certain field of view, said masking optical element (10) projecting input light indicative of the virtual image onto said optical pupil of the optical unit (14), wherein said masking optical element (10) has a spatially varying transmission profile across said masking optical element (10) configured in accordance with intensity non-uniformities due to a non-uniform transfer function of said optical unit (14), to affect regions of relatively high light intensity within said non-uniform intensity profile (IPi), thereby applying intensity modulation to the light passing through the masking optical element (10) to improve intensity uniformity of light being input to the optical pupil of the optical unit (14),
**characterized in that**
said masking optical element (10) comprises a pattern of successive regions of continuously varying transmission, thereby providing said spatially varying transmission profile,
wherein said pattern providing the spatially varying transmission profile is defined by at least one of the following: (a) said pattern comprises a predetermined arrangement of said regions defined by predetermined dimensions of the regions, spaces between them, and optical density of said regions; (b) said pattern corresponds to a projection of said predetermined non-uniform intensity profile (IP₁) across said field of view onto said masking optical element (10).

12. The optical system (100) of claim 11, wherein said optical unit (14) comprises a light guiding element configured to guide the light propagation therethrough via total internal reflections from major surfaces (26, 28) of the light guiding element.

13. The optical system (100) of claim 12, wherein said light guiding element is configured as a beam expander.

14. A method for improving intensity uniformity of light, indicative of a virtual image in a near-eye display device, the method comprising:
passing light corresponding to a uniform input scene through an optical unit (14) to produce input light having intensity non-uniformities due to a non-uniform transfer function of said optical unit (14);
providing data indicative of a non-uniform intensity profile (IP₁) of said input light indicative of the virtual image across a certain field of view; and
analyzing said data indicative of the non-uniform intensity profile (IP₁) of the input light, and determining a spatially varying transmission profile to be applied to the input light across said certain field of view to apply intensity modulation to the input light to affect regions of relatively high light intensity within said intensity profile and thereby improve intensity uniformity of said light,
**characterized in that**
said spatially varying transmission profile comprises a pattern of successive regions of continuously varying transmission,
wherein said pattern providing the spatially varying transmission profile corresponds to a projection of said non-uniform intensity profile (IP₁) across said field of view onto a plane in which said spatially varying transmission profile is applied to said input light.

## Patentansprüche

1. Optisches System (100) zur Verwendung in einer augennahen Anzeigevorrichtung zum Projizieren eines virtuellen Bildes, wobei das optische System (100) umfasst:
eine optische Einheit (12), die einen Lichtleitkanal definiert, um ein das virtuelle Bild angebendes Eingangslicht durch den Kanal hindurch zu leiten und um Ausgangslicht mit einem Sehfeld bereitzustellen, wobei das Ausgangslicht ein vorbestimmtes ungleichmäßiges Intensitätsprofil (IP₁) über das Sehfeld aufweist; und
ein maskierendes optisches Element (10), das mit einem Ausgang der optischen Einheit (12) zum Durchgang von Ausgangslicht durch das maskierende optische Element (10) hindurch optisch gekoppelt ist, wobei das maskierende optische Element (10) ein räumlich variierendes Transmissionsprofil über das maskierende optische Element (10) aufweist, das gemäß Intensitätsungleichmäßigkeiten, die auf eine ungleichmäßige Transferfunktion der optischen Einheit (12) zurückzuführen sind, konfiguriert ist, um Regionen mit relativ hoher Lichtintensität innerhalb des Intensitätsprofils zu beeinflussen, um dadurch eine Intensitätsmodulation auf Licht anzuwenden, das durch das maskierende optische Element (10) hindurch geht, um das virtuelle Bild mit verbesserter Lichtintensitätsgleichmäßigkeit bereitzustellen,
**dadurch gekennzeichnet, dass** das maskierende optische Element (10) ein Muster aus aufeinanderfolgenden Regionen mit stufenlos variabler Transmission umfasst, wodurch das räumlich variierende Transmissionsprofil bereitgestellt wird, wobei das Muster, welches das räumlich variierende Transmissionsprofil bereitstellt, durch mindestens eines der folgenden Elemente definiert ist: (a) das Muster umfasst eine vorbestimmte Anordnung der Regionen, die durch vorbestimmte Dimensionen der Regionen, Zwischenräume dazwischen und die optische Dichte der Regionen definiert ist; (b) das Muster entspricht einer Projektion des vorbestimmten ungleichmäßigen Intensitätsprofils (IP₁) über das Sehfeld auf das maskierende optische Element (10).

2. Optisches System (100) nach Anspruch 1, wobei das räumlich variierende Transmissionsprofil des maskierenden optischen Elements (10) konfiguriert ist, um die Lichtintensität in den Regionen zu beeinflussen, damit sie unter einer gewissen Schwelle liegt.

3. Optisches System (100) nach einem der vorhergehenden Ansprüche, wobei die optische Einheit (12) ein erstes Lichtleitelement umfasst, das dazu konfiguriert ist, die Eingangslichtausbreitung durch diese hindurch über Totalreflexionen von den Hauptflächen (26, 28) des ersten Lichtleitelements aus zu leiten.

4. Optisches System (100) nach Anspruch 3, wobei die optische Einheit (12) mindestens eine der folgenden Konfigurationen aufweist: die optische Einheit (12) ist als Strahlaufweiter konfiguriert; und das erste Lichtleitelement der optischen Einheit (12) umfasst ein Substrat, das die Hauptflächen (26, 28) und eine oder mehrere mindestens teilweise reflektierende Oberflächen, die in das Substrat eingebettet sind, aufweist, um das Licht, welches das virtuelle Bild angibt, aus dem Substrat heraus zu dem maskierenden optischen Element (10) zu reflektieren.

5. Optisches System (100) nach einem der vorhergehenden Ansprüche, ferner umfassend eine zusätzliche optische Einheit (14), die mit dem maskierenden optischen Element (10) optisch gekoppelt ist, um das intensitätsmodulierte Licht, das aus dem maskierenden optischen Element (10) hervorgeht, zu leiten, damit es aus der Anzeigevorrichtung in einer oder mehreren Ausgangsrichtungen ausgegeben wird.

6. Optisches System (100) nach Anspruch 5, wobei die zusätzliche optische Einheit (14) als Lichtleiter konfiguriert ist, um die Lichtausbreitung durch diese hindurch durch Totalreflexion von den Hauptflächen (26, 28) des Lichtleiters aus zu leiten, und eine oder mehrere mindestens teilweise reflektierende Oberfläche aufweist, um das Licht des virtuellen Bildes in eine oder mehrere Ausgangsrichtungen zu reflektieren.

7. Optisches System (100) nach Anspruch 6, wobei die zusätzliche optische Einheit (14) als Strahlaufweiter konfiguriert ist.

8. Optisches System (100) nach einem der Ansprüche 5 bis 7, wobei die optische Einheit (12) und die zusätzliche optische Einheit (14) als Strahlaufweiter konfiguriert sind, um nacheinander das Licht, welches das virtuelle Bild angibt, jeweils an zwei rechtwinkligen Achsen entlang aufzuweiten.

9. Optisches System (100) nach einem der Ansprüche 6 bis 8, wobei mindestens der Lichtleiter der zusätzlichen optischen Einheit (14) als ein zweites durchsichtiges Lichtleitelement konfiguriert ist, um das projizierte virtuelle Bild zu leiten und ein reales Szenenbild durchzulassen, wodurch das virtuelle Bild auf das reale Szenenbild augmentiert wird.

10. Optisches System (100) nach einem der Ansprüche 6 bis 9, wobei:
das erste und das zweite Lichtleitelement jeweils der optischen Einheit (12) und der zusätzlichen optischen Einheit (14) kaskadierend aufgenommen sind, so dass das zweite Lichtleitelement mit einem Ausgang des ersten Lichtleitelements optisch gekoppelt ist; und
das maskierende optische Element (10) an einer optischen Schnittstelle zwischen dem ersten und dem zweiten Lichtleitelement aufgenommen ist, um das Licht, das von dem ersten Lichtleitelement mit einem gewissen Sehfeld ausgegeben wird, mit einem Eingang des zweiten Lichtleitelements optisch zu koppeln, wobei das räumlich variierende Transmissionsprofil über das maskierende optische Element (10) gemäß Intensitätsungleichmäßigkeiten, die auf eine ungleichmäßige Transferfunktion der optischen Einheit (12) zurückzuführen sind, konfiguriert ist, wodurch die Intensitätsgleichmäßigkeit von Licht, das in das zweite Lichtleitelement eingegeben wird, verbessert wird.

11. Optisches System (100) zur Verwendung in einer augennahen Anzeigevorrichtung zum Projizieren eines virtuellen Bildes, wobei das optische System (100) umfasst:
eine optische Einheit (14), die eine optische Pupille aufweist und dazu konfiguriert ist, einen Lichtleitkanal zu definieren, um das Licht durch den Kanal hindurch zu leiten, damit es aus der optischen Einheit (14) in einer oder mehreren Ausgangsrichtungen ausgegeben wird; und
ein maskierendes optisches Element (10), das mit Bezug auf eine allgemeine Lichtausbreitungsrichtung durch das optische System (100) hindurch stromaufwärts von der optischen Einheit (14) aufgenommen ist, wobei das Licht ein vorbestimmtes ungleichmäßiges Intensitätsprofil (IP₁) über ein gewisses Sehfeld aufweist,
wobei das maskierende optische Element (10), welches das Eingangslicht, welches das virtuelle Bild angibt, auf die optische Pupille der optischen Einheit (14) projiziert, wobei das maskierende optische Element (10) ein räumlich variierendes Transmissionsprofil über das maskierende optische Element (10) aufweist, das gemäß Intensitätsungleichmäßigkeiten, die auf eine ungleichmäßige Transferfunktion der optischen Einheit (14) zurückzuführen sind, konfiguriert ist, um Regionen mit relativ hoher Lichtintensität innerhalb des ungleichmäßigen Intensitätsprofils (IP₁) zu beeinflussen, wodurch eine Intensitätsmodulation auf das Licht angewendet wird, das durch das maskierende optische Element (10) hindurch geht, um die Intensitätsgleichmäßigkeit von Licht, das in die optische Pupille der optischen Einheit (14) eingegeben wird, zu verbessern,
**dadurch gekennzeichnet, dass** das maskierende optische Element (10) ein Muster aus aufeinanderfolgenden Regionen mit stufenlos variierender Transmission umfasst, wodurch das räumlich variierende Transmissionsprofil bereitgestellt wird,
wobei das Muster, welches das räumlich variierende Transmissionsprofil bereitstellt, durch mindestens eines der folgenden Elemente definiert ist: (a) das Muster umfasst eine vorbestimmte Anordnung der Regionen, das durch vorbestimmte Dimensionen der Regionen, Zwischenräume dazwischen und eine optische Dichte der Regionen definiert ist; (b) das Muster entspricht einer Projektion des vorbestimmten ungleichmäßigen Intensitätsprofils (IP₁) über das Sehfeld auf das maskierende optische Element (10).

12. Optisches System (100) nach Anspruch 11, wobei die optische Einheit (14) ein Lichtleitelement umfasst, das dazu konfiguriert ist, die Lichtausbreitung durch diese hindurch über Totalreflexionen von den Hauptflächen (26, 28) des Lichtleitelements aus zu leiten.

13. Optisches System (100) nach Anspruch 12, wobei das Lichtleitelement als Strahlaufweiter konfiguriert ist.

14. Verfahren zum Verbessern der Intensitätsgleichmäßigkeit von Licht, das ein virtuelles Bild in einer augennahen Anzeigevorrichtung angibt, wobei das Verfahren folgende Schritte umfasst:
Durchlassen von Licht, das einer gleichmäßigen Eingangsszene entspricht, durch eine optische Einheit (14) hindurch, um ein Eingangslicht zu erzeugen, das Intensitätsungleichmäßigkeiten aufweist, die auf eine ungleichmäßige Transferfunktion der optischen Einheit (14) zurückzuführen sind;
Bereitstellen von Daten, die ein ungleichmäßiges Intensitätsprofil (IP₁) des Eingangslicht, welches das virtuelle Bild angibt, über ein gewisses Sehfeld angeben; und
Analysieren der Daten, die das ungleichmäßige Intensitätsprofil (IP₁) des Eingangslichts angeben, und Bestimmen eines räumlich variierenden Transmissionsprofils, das auf das Eingangslicht über das gewisse Sehfeld anzuwenden ist, um eine Intensitätsmodulation auf das Eingangslicht anzuwenden, um Regionen mit relativ hoher Lichtintensität innerhalb des Intensitätsprofils zu beeinflussen und dadurch die Intensitätsgleichmäßigkeit des Lichts zu verbessern,
**dadurch gekennzeichnet, dass** das räumlich variierende Transmissionsprofil ein Muster aus aufeinanderfolgenden Regionen mit stufenlos variierendem Transmission umfasst,
wobei das Muster, welches das räumlich variierende Transmissionsprofil bereitstellt, einer Projektion des ungleichmäßigen Intensitätsprofils (IP₁) über das Sehfeld auf eine Ebene entspricht, in der das räumlich variierende Transmissionsprofil auf das Eingangslicht angewendet wird.

## Revendications

1. Système optique (100) destiné à être utilisé dans un dispositif d'affichage proche de l'œil permettant de projeter une image virtuelle, le système optique (100) comprenant :
une unité optique (12) définissant un canal de guidage de la lumière permettant de guider la lumière d'entrée indiquant l'image virtuelle à travers ledit canal et fournissant un champ de vision à une lumière de sortie, ladite lumière de sortie ayant un profil d'intensité non uniforme prédéterminé (IP₁) sur l'ensemble dudit champ de vision ; et
un élément optique de masquage (10) couplé optiquement à une sortie de ladite unité optique (12) pour le passage de la lumière de sortie à travers l'élément optique de masquage (10), ledit élément optique de masquage (10) ayant un profil de transmission à variation spatiale sur l'ensemble dudit élément optique de masquage (10) conçu conformément aux non-uniformités d'intensité dues à une fonction de transfert non-uniforme de ladite unité optique (12), pour affecter des zones d'intensité de lumière relativement élevée dans ledit profil d'intensité afin d'appliquer une modulation d'intensité à la lumière traversant l'élément optique de masquage (10) pour fournir à l'image virtuelle une uniformité d'intensité de lumière améliorée
**caractérisé en ce que** ledit élément optique de masquage (10) comprend un modèle de zones successives de transmission à variation continue, fournissant ainsi ledit profil de transmission à variation spatiale,
dans lequel ledit modèle fournissant le profil de transmission à variation spatiale est défini par au moins l'un des cas de figure suivants : (a) ledit modèle comprend un agencement prédéterminé desdites zones défini par des dimensions prédéterminées des zones, par des espaces entre elles et par une densité optique desdites zones ; (b) ledit modèle correspond à une projection dudit profil d'intensité non uniforme prédéterminé (IP₁) sur l'ensemble dudit champ de vision sur ledit élément optique de masquage (10).

2. Système optique (100) selon la revendication 1, dans lequel ledit profil de transmission à variation spatiale de l'élément optique de masquage (10) est conçu pour affecter l'intensité de lumière dans lesdites zones pour qu'elle soit inférieure à un certain seuil.

3. Système optique (100) selon l'une quelconque des revendications précédentes, dans lequel ladite unité optique (12) comprend un premier élément de guidage de lumière conçu pour guider la propagation de lumière d'entrée à travers celle-ci par l'intermédiaire de réflexions totales internes à partir de surfaces principales (26, 28) du premier élément de guidage de lumière.

4. Système optique (100) selon la revendication 3, dans lequel ladite unité optique (12) a au moins l'une des configurations suivantes : ladite unité optique (12) est conçue comme un dilatateur de faisceau ; et ledit premier élément de guidage de lumière de l'unité optique (12) comprend un substrat présentant lesdites surfaces principales (26, 28) et une ou plusieurs surfaces au moins partiellement réfléchissantes intégrées dans ledit substrat pour réfléchir la lumière indiquant l'image virtuelle depuis ledit substrat vers l'élément optique de masquage (10).

5. Système optique (100) selon l'une quelconque des revendications précédentes, comprenant en outre une unité optique supplémentaire (14) couplée optiquement audit élément optique de masquage (10) permettant de guider la lumière modulée en intensité émergeant de l'élément optique de masquage (10) pour sortir du dispositif d'affichage dans une ou plusieurs directions de sortie.

6. Système optique (100) selon la revendication 5, dans lequel ladite unité optique supplémentaire (14) est conçue comme un guide de lumière permettant de guider la propagation de lumière à travers celle-ci au moyen d'une réflexion totale interne à partir de surfaces principales (26, 28) du guide de lumière, et présentant une ou plusieurs surfaces au moins partiellement réfléchissantes permettant de réfléchir la lumière d'image virtuelle dans une ou plusieurs directions de sortie.

7. Système optique (100) selon la revendication 6, dans lequel ladite unité optique supplémentaire (14) est conçue comme un dilatateur de faisceau.

8. Système optique (100) selon l'une quelconque des revendications 5 à 7, dans lequel ladite unité optique (12) et ladite unité optique supplémentaire (14) sont conçues comme des dilatateurs de faisceaux pour dilater successivement la lumière indiquant l'image virtuelle le long de deux axes perpendiculaires, respectivement.

9. Système optique (100) selon l'une quelconque des revendications 6 à 8, dans lequel au moins ledit guide de lumière de l'unité optique supplémentaire (14) est conçu comme un second élément de guidage de lumière transparent permettant de guider l'image virtuelle projetée et de transmettre une image de scène réelle, augmentant ainsi l'image virtuelle sur l'image de scène réelle.

10. Système optique (100) selon l'une quelconque des revendications 6 à 9, dans lequel :
les premier et second éléments de guidage de lumière, respectivement, de ladite unité optique (12) et de ladite unité optique supplémentaire (14), sont placés en cascade de sorte que le second élément de guidage de lumière est couplé optiquement à une sortie du premier élément de guidage de lumière ; et
ledit élément optique de masquage (10) est placé au niveau d'une interface optique entre le premier et le second éléments de guidage de lumière permettant de coupler optiquement la lumière sortant du premier élément de guidage de lumière avec un certain champ de vision vers une entrée du second élément de guidage de lumière, le profil de transmission à variation spatiale sur l'ensemble dudit élément optique de masquage (10) étant conçu conformément aux non-uniformités d'intensité dues à une fonction de transfert non-uniforme de ladite unité optique (12), améliorant ainsi l'uniformité d'intensité de la lumière entrée dans le second élément de guidage de lumière.

11. Système optique (100) destiné à être utilisé dans un dispositif d'affichage proche de l'œil permettant de projeter une image virtuelle, le système optique (100) comprenant :
une unité optique (14) ayant une pupille optique, et conçue pour définir un canal de guidage de la lumière permettant de guider la lumière à travers ledit canal pour sortir de l'unité optique (14) dans une ou plusieurs directions de sortie ; et
un élément optique de masquage (10) placé en amont de l'unité optique (14) par rapport à une direction de propagation générale de la lumière à travers le système optique (100),
ladite lumière ayant un profil d'intensité non-uniforme prédéterminé (IP₁) sur l'ensemble d'un certain champ de vision,
ledit élément optique de masquage (10) projetant une lumière d'entrée indiquant l'image virtuelle sur ladite pupille optique de l'unité optique (14),
dans lequel ledit élément optique de masquage (10) présente un profil de transmission à variation spatiale sur l'ensemble dudit élément optique de masquage (10) conçu conformément aux non-uniformités d'intensité dues à une fonction de transfert non-uniforme de ladite unité optique (14), pour affecter des zones d'intensité de lumière relativement élevée dans ledit profil d'intensité non uniforme (IP₁), appliquant ainsi une modulation d'intensité à la lumière traversant l'élément optique de masquage (10) pour améliorer l'uniformité d'intensité de la lumière entrée dans la pupille optique de l'unité optique (14),
**caractérisé en ce que**
ledit élément optique de masquage (10) comprend un modèle de zones successives de transmission à variation continue, fournissant ainsi ledit profil de transmission à variation spatiale,
dans lequel ledit modèle fournissant le profil de transmission à variation spatiale est défini par au moins l'un des cas de figure suivants : (a) ledit modèle comprend un agencement prédéterminé desdites zones défini par des dimensions prédéterminées des zones, par des espaces entre elles et par une densité optique desdites zones ; (b) ledit modèle correspond à une projection dudit profil d'intensité non uniforme prédéterminé (IP₁) sur l'ensemble dudit champ de vision sur ledit élément optique de masquage (10).

12. Système optique (100) selon la revendication 11, dans lequel ladite unité optique (14) comprend un élément de guidage de lumière conçu pour guider la propagation de lumière à travers celle-ci par l'intermédiaire de réflexions totales internes à partir de surfaces principales (26, 28) de l'élément de guidage de lumière.

13. Système optique (100) selon la revendication 12, dans lequel ledit élément de guidage de lumière est conçu comme un dilatateur de faisceau.

14. Procédé permettant d'améliorer l'uniformité d'intensité de la lumière, indiquant une image virtuelle dans un dispositif d'affichage proche de l'œil, le procédé comprenant :
le passage de la lumière correspondant à une scène d'entrée uniforme à travers une unité optique (14) pour produire une lumière d'entrée présentant des non-uniformités d'intensité dues à une fonction de transfert non-uniforme de ladite unité optique (14) ;
la fourniture de données indiquant un profil d'intensité non uniforme (IP₁) de ladite lumière d'entrée indiquant l'image virtuelle sur l'ensemble d'un certain champ de vision ; et
l'analyse desdites données indiquant le profil d'intensité non uniforme (IP₁) de la lumière d'entrée, et la détermination d'un profil de transmission à variation spatiale à appliquer à la lumière d'entrée sur l'ensemble dudit certain champ de vision pour appliquer une modulation d'intensité à la lumière d'entrée pour affecter des zones d'intensité de lumière relativement élevée dans ledit profil d'intensité et améliorer ainsi l'uniformité d'intensité de ladite lumière,
**caractérisé en ce que**
ledit profil de transmission à variation spatiale comprend un modèle de zones successives de transmission à variation continue,
dans lequel ledit modèle fournissant le profil de transmission à variation spatiale correspond à une projection dudit profil d'intensité non uniforme (IP₁) sur l'ensemble dudit champ de vision sur un plan dans lequel ledit profil de transmission à variation spatiale est appliqué à ladite lumière d'entrée.
